# EUROPEAN PATENT APPLICATION

(11) **EP 1 965 046 A1**
(43) Date of publication of application: **03.09.2008**
(21) Application number: 07008391.0
(22) Date of filing: 25.04.2007
(51) Int. Cl.: F01N 3/021, F01N 3/033, F01N 3/035, B01D 46/24, F02M 35/02, F16L 37/12

(54) **Exhaust gas treatment device for a diesel engine**

(30) Priority: 28.02.2007 GB 0703820
(71) Applicant: Delphi Technologies, Inc., Troy, Michigan 48007 (US)
(72) Inventor: Hillard, Christian, 57300 Mondelange (FR); Preuhs, Francois, Paquet 2737 (LU); Zidat, Said, 57100 Thionville (FR)
(74) Representative: Waller, Stephen

(57) **Abstract**

An exhaust gas treatment device (10) comprising an oxidation catalyst (18) and a particulate filter (20) mounted in series within a substantially cylindrical housing (12) having a gas inlet (14) and a gas outlet (16), the housing being separable into first and second sections (22,24) to permit access to the particulate filter, the device comprising fastening means for releasably retaining said first and second housing sections together, wherein the fastening means comprises a first outwardly extending circumferential flange(32) provided on one of the first and second housing sections of the housing and a second outwardly extending circumferential flange (34) provided on the other of the first and second housing sections, a circumferential clamping band (30) encircling said housing and having first and second inwardly directed circumferential lips respectively adapted to engage said first and second circumferential flanges and being arranged to provide a circumferential and axial clamping force to hold the first and second housing sections together, whereby said clamping band includes means for releasing said clamping force to allow separation of said first and second housing sections, characterised in that positive locating means are provided on the housing sections, acting between the first and second housing sections, for locating the first and second housing parts in correct relative position during assembly prior to application of said clamping force by said clamping band.

## Description

The present invention relates to an exhaust gas treatment device for a diesel engine, and in particular to an exhaust gas treatment device comprising an oxidation catalyst and a particulate filter mounted in series within a housing having a gas inlet and a gas outlet.

Such devices are used in particular for the treatment of exhaust gases from a vehicle diesel engine. The oxidation catalyst unit is utilised for the treatment of the pollutants in the gaseous phase, such as nitrous oxides and carbon monoxide, whilst the particulate filter is adapted to trap soot particles emitted by the engine.

In order to avoid blockage of the particulate filter by accumulated soot, leading to an increase in exhaust back pressure, and ultimately a breakdown of the filter, particulate filters require periodic regeneration. During regeneration the temperature of the filter is increased so that the accumulated soot is burnt off, thereby ensuring both acceptable back pressure levels and the avoidance of filter overload.

This periodic regeneration process requires the temperature of the particulate filter to be greatly elevated. The temperature of the particulate filter must be raised to around 600°C in order to burn off the soot, compared to a normal exhaust operating temperature of 150°C. In a known regeneration process extra fuel is injected late in the injection cycle such that unburnt fuel combusts the oxidation catalyst upstream of the particulate filter in order to achieve the required elevated temperature of the particulate filter.

In order to encourage the regeneration of the particulate filter, it is necessary to incorporate into the fuel supplied to the engine an additive which lowers the combustion temperature of the soot. The additive is burnt in the combustion chamber of the engine and deposited in the form of ash on an upstream face of the particulate filter.
The accumulation of ash substantially increases the backpressure caused by the particulate filter and affects the particulate filter's ability to be regenerated. Therefore it is necessary to periodically gain access to the particulate filter, typically every 80,000 to 120,000 km, to enable manual removal of the ash, for example by cleaning using a high pressure water flow. The limited space available within the engine compartment of a modern vehicle means that the design of the housing of the exhaust gas treatment device, and in particular the means for providing access to the particulate filter, is critical to enable easy servicing.

It is known to provide a housing for an exhaust gas treatment device wherein the housing is separable into two sections to gain access to the particulate filter. A clamping band is normally used to secure the two housing sections together. However, it is also necessary to provide a positive retention means for positively locating the two housing parts together in correct position before the clamping band is tightened, otherwise it would be necessary for the service technician to physically hold the two housing parts together while at the same time tightening the clamping band. Such known positive retention means typically comprise resilient catch means that require considerable axial force to be applied to the housing sections to separate the sections.

An objective of the present invention is to provide an exhaust has treatment device having a compact housing that is readily and easily separable to permit access to the particulate filter for periodic servicing.

According to the present invention there is provided an exhaust gas treatment device comprising an oxidation catalyst and a particulate filter mounted in series within a substantially cylindrical housing having a gas inlet and a gas outlet, the housing being separable into first and second sections to permit access to the particulate filter, the device comprising fastening means for releasably retaining said first and second housing sections together, wherein the fastening means comprises a first outwardly extending circumferential flange provided on one of the first and second housing sections of the housing and a second outwardly extending circumferential flange provided on the other of the first and second housing sections, a circumferential clamping band encircling said housing and having first and second inwardly directed circumferential lips respectively adapted to engage said first and second circumferential flanges and being arranged to provide a circumferential and axial clamping force to hold the first and second housing sections together, whereby said clamping band includes means for releasing said clamping force to allow separation of said first and second housing sections, positive locating means being provided on the housing sections, acting between the first and second housing sections, for locating the first and second housing parts in correct relative position during assembly prior to application of said clamping force by said clamping band.

Preferably said positive locating means comprises at least one slot or groove provided on one of the first an second housing parts and at least one projection provided on the other of the first and second housing parts to be engageable with said at least one slot of groove, said at least one slot or groove having a first part extending in a direction perpendicular to the longitudinal axis of the housing and second part extending from said first part in a direction substantially parallel to the longitudinal axis of the housing, whereby the housing parts are separable by means of a rotational movement, whereby said at least one projection moves within said first part of the at least one slot or groove, and an axial movement, whereby said at least one projection moves within said second part of the at least one slot or groove.

In a preferred embodiment, end sections of the first and second housing sections overlap one another when the housing sections are joined together said at least one groove or slot and said at least one projection being provided on said overlapping end sections.

In a preferred embodiment, the fastening means includes a sleeve secured around or formed integrally with a circumferential region of the first housing section, said first circumferential flange, for engagement by a lip of the clamping band, being formed on said sleeve, said first part of said at least one slot or groove of said positive locating means comprising a circumferential groove extending around said sleeve, said second part of said at least one slot or groove comprising one or more axially extending channels extending from said circumferential groove towards the second housing section, said at least one projection of said positive locating means comprising one or more corresponding projections provided on the inner face of the overlapping end region of the second housing section to be engageable within said one or more axially extending channels to permit relative axial displacement and separation of said first and second housing sections when said one or more projections are brought into alignment with said one or more axially extending channels.

Thus the housing sections are readily separable in the manner of a bayonet fixing, the housing sections being separated by means of a first, rotary movement to slide the one or more projections within the circumferential groove into alignment with the axially extending channels and a second, axial movement to slide the one or move projections along said one or more axially extending channels.

Preferably at least a portion of the overlapping end region of the second housing is provided with a plurality of axially extending slots to provide resilient retention of said one or more projections provided in said corresponding groove and to permit the transfer of a radial clamping force from the clamping band.

Preferably said second peripheral flange for engagement by a lip of said circumferential band is formed by a circumferential outwardly extending lip provided around a peripheral edge of the end region of the second housing section.

A preferred embodiment of the present invention will now be described, by way of example only, with reference to the accompanying drawings, in which:

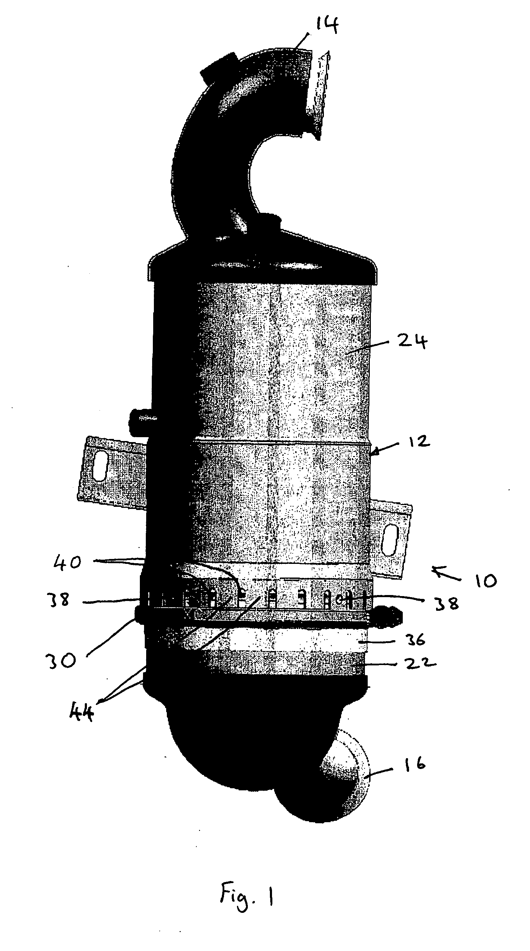

Fig. 1 is a side view of an exhaust gas treatment device according to an embodiment of the present invention;

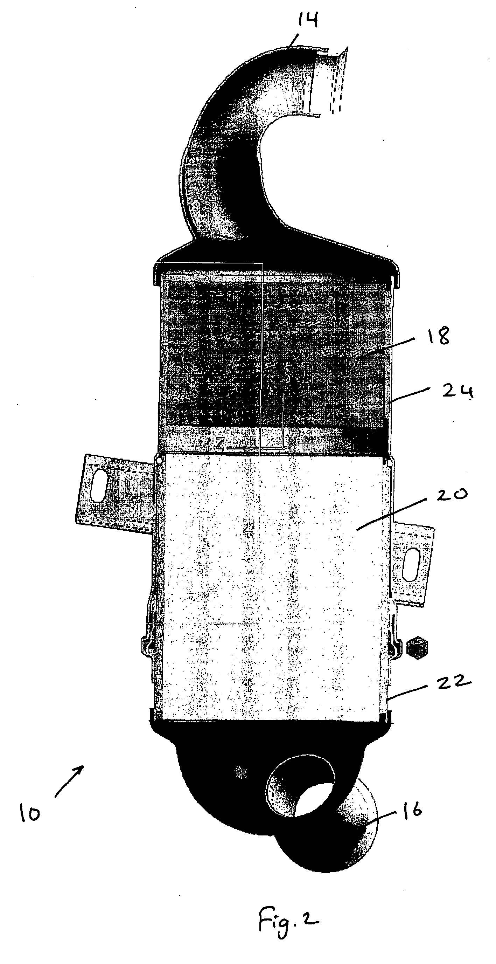

Fig. 2 is a sectional view of the exhaust gas treatment device of Fig.1;

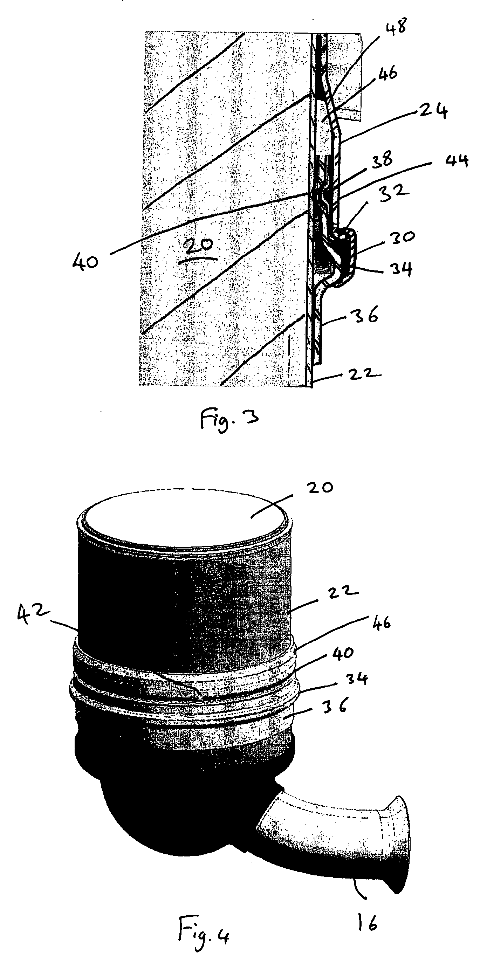

Fig. 3 is detailed sectional view of the fastening means of the exhaust gas treatment device of Fig. 1;
Fig. 4 is a perspective view of the lower section of the exhaust gas treatment device containing the particulate filter; and

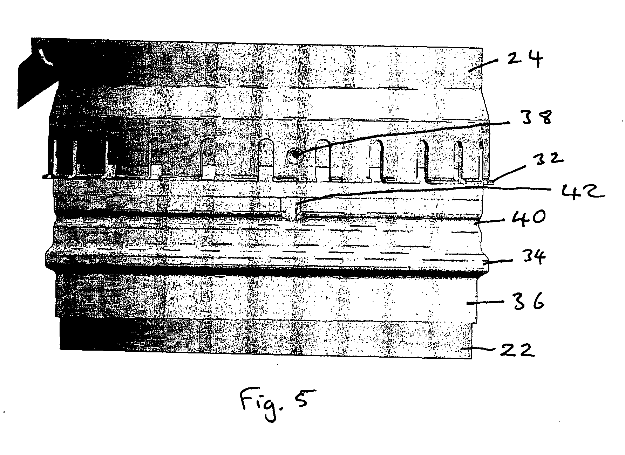

Fig. 5 is a detailed view of the exhaust gas treatment device during separation of the housing sections.

The exhaust gas treatment device 10 comprises a generally cylindrical housing 12 having an inlet 14 at one end and an outlet 16 at its other end. An oxidation catalyst 18 and a particulate filter 20 are disposed successively from the inlet towards the outlet inside the housing 12.

The oxidation catalyst 18 consists, for example, of a gas-permeable structure coated with catalytic metals which promote oxidation of the combustion gases and/or reduction of the nitrogen oxides.

The particulate filter 20 is produced from a filtration material consisting of a monolithic structure made from ceramic or from silicon carbide having sufficient porosity to permit the passage of the exhaust gases. However, as is known per se, the diameter of the pores is chosen to be sufficiently small to ensure that the particles, and particularly the soot particles, are trapped on the upstream face of the filter.

In order to provide access to the particulate filter 20 for the removal of ash therefrom, the particulate filter 20 is provided in a lower housing section 22 which is slidably receivable within an upper section 24 containing the oxidation catalyst 18, such that the upper and lower housing sections 22, 24 are separable from one another to provide access to the particulate filter 20.

The upper and lower housing sections 22,24 are secured together by way of a fastening means comprising a circumferential clamping band 30 having inwardly facing lips adapted to fit over an outwardly radially projecting peripheral lip 32 provided on a lower edge of the upper housing section 24 and an outwardly radially projecting circumferential flange 34 provided on a sleeve 36 located around a peripheral region of the lower housing section 22, the clamping band 30 including means for tightening the clamping band to fit around the housing 10 to provide a circumferential and axial clamping force to hold the upper and lower housing sections 22,24 together, whereby said clamping band includes means for releasing said clamping force to allow separation of the upper and lower housing sections 22,24 to gain access to the particulate filter 20.

In order to positively locate the upper housing section 24 in a correct position over the lower housing section 22 prior to tightening of the clamping band 30, an plurality inwardly facing projections 38 are provided at spaced locations around an inner periphery of the upper housing section 22 to be receivable within a circumferential groove 40 formed in the outer periphery of the sleeve 36 of the lower housing section 22. Channels 42 are formed at spaced locations around the sleeve, extending axially from the groove 40 whereby the housing sections can be rotated with respect to one another to bring the projections 38 into alignment with the channels 42 to permit the housing sections 22,24 to be readily separated in a axial direction, each projection 38 sliding along a respective channel 42 during separation of the housing parts 22,24.

A resilient seal 46 is located around the circumference of the lower housing section 22 above the sleeve 36 to be enageable against the inner surface of the upper housing section 24 to provide a gas-tight seal therebetween. An upper region of the seal 46 is tapered to be received against a conical region 48 of the upper housing section 24.

Axial slots are formed in the end region of the upper housing section 24 to define a plurality of axially extending tabs 44 to permit resilient deflection of the end region of the upper housing section to provide a resilient retention of said projections 38 with said groove 40 and to permit a radial clamping force exerted by the clamping band 30 to be transmitted to the lower housing section 22.

In operation, the exhaust gases first of all circulate through the oxidation catalyst 18 then through the particulate filter 20. After a period of time, when it is desired to remove ash from the particulate filter, the clamping band 30 is released and the lower housing section 22 is rotated with respect to the upper housing section 24 to bring the projections 38 formed on the inner surface of the upper housing 24 into alignment with the axially extending channels 42. The lower housing part 22 can then be pulled out of the upper housing section 24, thereby gaining access to the upstream face of the particulate filter 20.

Various modifications and variations to the described embodiments of the inventions will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. An exhaust gas treatment device (10) comprising an oxidation catalyst (18) and a particulate filter (20) mounted in series within a substantially cylindrical housing (12) having a gas inlet (14) and a gas outlet (16), the housing being separable into first and second sections (22,24) to permit access to the particulate filter, the device comprising fastening means for releasably retaining said first and second housing sections together, wherein the fastening means comprises a first outwardly extending circumferential flange(32) provided on one of the first and second housing sections of the housing and a second outwardly extending circumferential flange (34) provided on the other of the first and second housing sections, a circumferential clamping band (30) encircling said housing and having first and second inwardly directed circumferential lips respectively adapted to engage said first and second circumferential flanges and being arranged to provide a circumferential and axial clamping force to hold the first and second housing sections together, whereby said clamping band includes means for releasing said clamping force to allow separation of said first and second housing sections, **characterised in that** positive locating means are provided on the housing sections, acting between the first and second housing sections, for locating the first and second housing parts in correct relative position during assembly prior to application of said clamping force by said clamping band.

2. An exhaust gas treatment device as claimed in claim 1, wherein said positive locating means comprises at least one slot or groove (40,42) provided on one of the first an second housing parts and at least one projection (38) provided on the other of the first and second housing parts to be engageable with said at least one slot of groove, said at least one slot or groove having a first part (40) extending in a direction perpendicular to the longitudinal axis of the housing and at least one second part (42) extending from said first part in a direction substantially parallel to the longitudinal axis of the housing, whereby the housing parts are separable by means of a rotational movement, whereby said at least one projection moves within said first part of the at least one slot or groove, and an axial movement, whereby said at least one projection moves within said second part of the at least one slot or groove.

3. An exhaust gas treatment device as claimed in claim 2, wherein end sections of the first and second housing sections overlap one another when the housing sections are joined together, said at least one groove or slot and said at least one projection being provided on said overlapping end sections.

4. An exhaust gas treatment device as claimed in claim 3, wherein the fastening means includes a sleeve secured around or formed integrally with a circumferential region of the first housing section, said first circumferential flange, for engagement by a lip of the clamping band, being formed on said sleeve, said first part of said at least one slot or groove of said positive locating means comprising a circumferential groove (40) extending around said sleeve, said second part of said at least one slot or groove comprising one or more axially extending channels (42) extending from said circumferential groove (40) towards the second housing section, said at least one projection of said positive locating means comprising one or more corresponding projections (38) provided on the inner face of the overlapping end region of the second housing section to be engageable within said one or more axially extending channels (42) to permit relative axial displacement and separation of said first and second housing sections when said one or more projections (38) are brought into alignment with said one or more axially extending channels (42).

5. An exhaust gas treatment device as claimed in claim 3 or claim 4, wherein at least a portion of the overlapping end region of the second housing is provided with a plurality of axially extending slots to provide resilient retention of said one or more projections provided in said corresponding groove and to permit the transfer of a radial clamping force from the clamping band.

6. An exhaust gas treatment device as claimed in any preceding claim, wherein said second peripheral flange for engagement by a lip of said circumferential band is formed by a circumferential outwardly extending lip provided around a peripheral edge of the end region of the second housing section.
